(19)

**Europäisches Patentamt**
**European Patent Office**
**Office européen des brevets**

(11) **EP 2 551 802 A1**

(12) **EUROPEAN PATENT APPLICATION**

(43) Date of publication:
**30.01.2013 Bulletin 2013/05**

(51) Int Cl.:
***G06Q 10/00*** (2012.01)

(21) Application number: **11175980.9**

(22) Date of filing: **29.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **SIEMENS AKTIENGESELLSCHAFT 80333 München (DE)**

(72) Inventors:
- **Legat, Christoph**
  **82256 Fürstenfeldbruck (DE)**
- **Heinecke, Georg**
  **39345 Flechtingen (DE)**
- **Lamparter, Steffen**
  **81671 München (DE)**
- **Lepratti, Raffaello**
  **10117 Berlin (DE)**

(54) **Processing a technical system**

(57)    It is proposed to utilize the flexibility of upcoming stages in a technical system, e.g., a manufacturing process, to assess whether or not a target objective, e.g., a production in time, can be met. The upcoming stages of the technical system can be selected to guarantee (if possible) meeting the target objective. If the target objective can no longer be met, an alarm or any other action can be triggered. Advantageously, the solution presented allows technical systems to cope with non-deterministic events that have a negative impact on the target objective. The flexibility of the system is utilized per stage towards the end of the manufacturing process to meet the target objective. The invention is applicable for all kinds of technical systems, e.g., industry and automation systems, in particular processing or delivery systems.

FIG 4

EP 2 551 802 A1

**Description**

The invention relates to a method and to a device for processing a technical system, in particular a manufacturing or a delivering system comprising several stages.

In the era of global and lean supply chains, job shops face many uncertainties because of various disruptions. Due to a variety of factors, uncertainties do not only occur internally (e.g., due to a machine breakdown) but increasingly outside the influence of a company (e.g., urgent jobs, supplier failure, demand fluctuations, etc.). Hence, in particular stochastic effects make it increasingly difficult for a predictive scheduling approach to fulfill a target date of a customer order by sequencing several processing stages.

However, for a schedule to be robust and responsive, a job shop (e.g., manufacturing system, delivery system, (part of a) supply chain) has to be able to cope with an uncertainty of events as well as effects that stem from such uncertainty.

To make supply chains more resilient, it is known to conduct preventive measures or to react immediately upon an (undesired) event. For example, dual sourcing is known to reduce an impact of negative events that might occur in a stochastic manner. The event is detected by monitoring means, e.g., RFID-based monitoring of products along the supply chain, provided in the job shop. The supply chain or the particular system within the supply chain can be construed in a flexible way to at least partially compensate such negative event even on short notice in a way that customers (e.g., a target objective such as a target date or a target quality) are not affected.

The **objective** is thus to provide an improved approach for a technical system, e.g., supply chain, manufacturing system, delivery system or the like, to ensure a target objective, e.g., a target date and/or a target quality.

This problem is solved according to the features of the independent claims. Further embodiments result from the depending claims.

In order to overcome this problem, a method is provided for processing a technical system comprising several stages,

- wherein for each subsequent stage of processing a work product a measure is determined indicating a probability to fulfill a target objective;
- wherein the subsequent stage is determined for which the measure indicates the highest probability to fulfill the target objective.

The measure can be or comprise a compensability criterion. The measure may in particular be a stochastic distribution that is approximated by a distribution function, in particular a probability density function, in particular a normal distribution.

It is noted that the highest probability may be or comprise a high like likelihood; also, the "highest probability" covers a scenario in which the measure indicates that the subsequent stage determined can be used best (among other stages) to achieve or fulfill the target objective. Hence, "indicating the highest probability" does not have to mean that the measure is a strict probability value.

The solution presented can be applied to various technical systems, in particular to components or machines of technical systems which are mapped to a common model. Thus, a compensability is suggested that allows a robust modus of operation of the technical system with regard to subsequent processing stages.

The solution at least partially compensates non-deterministic behavior of the technical system. Hence, stochastic undesired events that may have an impact on the system's performance can be alleviated and/or at least partially compensated. This significantly increases the overall robustness and performance of the technical system.

Decisions along stages of the technical system can be made with regard to upcoming flexibilities to maintain a target objective (e.g., delivery or manufacturing time).

It is noted that the steps of the method can be run iteratively from the end (sink) of the technical system towards its entry point; this way, the measures can be determined at each stage of the technical system considering the remaining stages towards the end.

The technical system may in particular process the work product along the several stages, wherein the stages may have an impact on the target objective. The measure can be assessed based on monitoring means provided along these processing stages of the technical system and/or together with the work product.

The work product can be a work piece, a (customer) order, a manufacturing item, etc.

In an embodiment, for at least two alternatives to be selected as subsequent stages of processing the work product, probability distributions for each of the alternatives are combined by an exclusive-or operation.

The exclusive-or operation can be determined via a maximum operator, i.e. by choosing the subsequent stage that has the highest measure to reach the target objective.

In another embodiment, upcoming stages that are to be processed in sequence are determined by combining their probability distributions in an additive manner.

In particular, normal distributions can be combined by adding their mean values and their variances.

In a further embodiment, the measure is determined when an event is detected.

The event may be a disruption of processing the work product, it may be a stochastic event and/or it may be an undesired (negative) event that may have an impact on the target objective.

In a next embodiment, the measure comprises, indicates or is based on a flexibility.

The flexibility may be used as a compensability criterion in order to (still) meet the target objective. Flexibility may be some degree of freedom and/or leeway to adjust at least one parameter of the technical system, in particular at a stage of the technical system, thereby having an impact on the target objective. For example, if the speed of a conveyor can be adjusted (to slow, normal, fast), a negative event can be compensated (e.g., by increasing or decreasing the speed of the conveyor). It is noted that such event may affect the quality and/or the in-time processing of the work product.

The flexibility may stem from a configuration of a stage of the technical system. The stage may be represented by a component, machine, device, software, hardware, transfer entity, etc. The configuration may be set by a software and/or hardware entity, a controller, a scheduler or the like.

The subsequent stage can be selected at a decision point. The decision point may in particular combine multiple outgoing transitions of a configuration graph indicating possibilities for a rescheduling system to choose from.

It is also an embodiment that the flexibility is based on at least one subsequent stage of processing the work product.

Pursuant to another embodiment, the subsequent stage is selected for which the measure indicates the highest probability to fulfill the target objective.

Hence, such selection allows meeting the target objective even in case a stochastic event with a negative impact on the target objective occurred. The impact of such an event can be determined by suitable monitoring means along the stages of the technical system and a counter-measure can be initiated by selecting the subsequent stages of the technical system such that the target objective can still be met.

According to an embodiment, a predefined action is triggered, if the measure(s) for the selected subsequent stage indicate(s) that the target objective cannot (can no longer) be met.

This can be achieved by setting a predefined threshold and comparing the actual measure with the predefined threshold.

According to another embodiment, said predefined action comprises

- an alarm;
- an adjustment of the technical system;
- an abortion of the technical system.

As another advantage, the number of alarms based on, e.g., time and/or quality deviations, can be reduced by a fully reactive manipulation of the technical system, i.e. by utilizing a remaining flexibility of the technical system to still meet the target objective.

In yet another embodiment, triggering the predefined action is dynamically adjusted based on historical data of the technical system.

Hence, experience can be gathered and then be used to adjust a threshold that is used for triggering the predefined action. This increases the accuracy of the predefined action.

In particular, probability distribution functions (and/or the threshold or triggering criterion) can be used and, e.g., adjusted based on historical (e.g., gathered) data.

According to a next embodiment, the technical system comprises at least one of the following:

- a production system or process,
- a manufacturing system or process,
- a delivery system or process,
- an automation system or process,
- a supply chain.

In case of a supply chain, stages may comprise factories or production sites and/or transport and logistics capabilities.

Pursuant to yet an embodiment, the stage of the technical system comprises at least one of the following:

- a component of the technical system;
- a machine;
- a material processing or conveying unit;
- a storage unit;

- a processing device;
- an automation device;
- a factory;
- a production site;
- a transport capability;
- a logistics capability.

It is noted that the technical system may comprise structural components as, e.g., cells, production lines, etc.
According to a further embodiment, the target objective comprises at least one of the following:

- a temporal or time objective;
- a quality objective.

The problem stated above is also solved by a device for processing a technical system,

- wherein the technical system comprises several stages,
- wherein the technical system comprises a processing unit that is arranged for
- determining a measure for each subsequent stage of processing a work product, which measure indicates a probability to fulfill a target objective;
- determining the subsequent stage for which the measure indicates the highest probability to fulfill the target objective.

It is noted that the steps of the method stated herein may be executable on this processing unit as well.
It is further noted that said processing unit can comprise at least one, in particular several means that are arranged to execute the steps of the method described herein. The means may be logically or physically separated; in particular several logically separate means could be combined in at least one physical unit.
Said processing unit may comprise at least one of the following: a processor, a microcontroller, a hard-wired circuit, an ASIC, an FPGA, a logic device.
The solution provided herein further comprises a computer program product directly loadable into a memory of a digital computer, comprising software code portions for performing the steps of the method as described herein.
In addition, the problem stated above is solved by a computer-readable medium, e.g., storage of any kind, having computer-executable instructions adapted to cause a computer system to perform the method as described herein.
Furthermore, the problem stated above is solved by a system comprising at least one device as described herein.
The aforementioned characteristics, features and advantages of the invention as well as the way they are achieved will be further illustrated in connection with the following examples and considerations as discussed in view of the figures.

Fig.1      shows a framework for an integration of flexibility concepts and scheduling approaches;

Fig.2A    shows a schematic of an exemplary logistics system comprising conveyors and a switch;

Fig.2B    shows a schematic path diagram based on the exemplary logistics system of Fig.2A;

Fig.3      shows a rescheduling graph based on Fig.2A and Fig.2B;

Fig.4      shows a rescheduling graph with annotated stochastic behavior of configurations and decision spaces of decision nodes substantially based on Fig.3;

Fig.5      shows an exemplary compensability function comprising two normal distribution functions, wherein the y-axis indicates a probability measure and the x-axis indicates a processing time.

The approach presented allows combining scheduling approaches and flexibility concepts to achieve a robust and responsive technical system that meets a target objective, e.g., a target (delivery, throughput or manufacturing) time and/or a target quality.
The technical system may comprise any system or process, e.g., a supply chain, a manufacturing system, a delivery system, an automation system, etc. The technical system comprises several stages (e.g., processing stations, machines, transition means between processing stations, etc.), wherein at least one of the stages introduces a flexibility that can be exploited for adjustment purposes. A robust schedule can be determined based on the technical system's flexibility to cope with various negative events (e.g., delays or early arrivals along the stages of the technical systems).

The technical system provides a work product, e.g., a work piece, a (customer) order, a manufacturing item, etc.

Said flexibility allows utilizing a compensability criterion, which can be used to devise an initial predictive, robust schedule that contains the sequence of stages, e.g., processing stations, for the work product. During processing the technical system, the compensability criterion can be used to change the schedule as soon as a negative event is detected or determined.

## SCHEDULING AND FLEXIBILITY

The scheduling can be classified as being static, dynamic and/or stochastic. With regard to stochastic events, scheduling may consider uncertainties concerning attributes, e.g., processing times and/or availabilities.

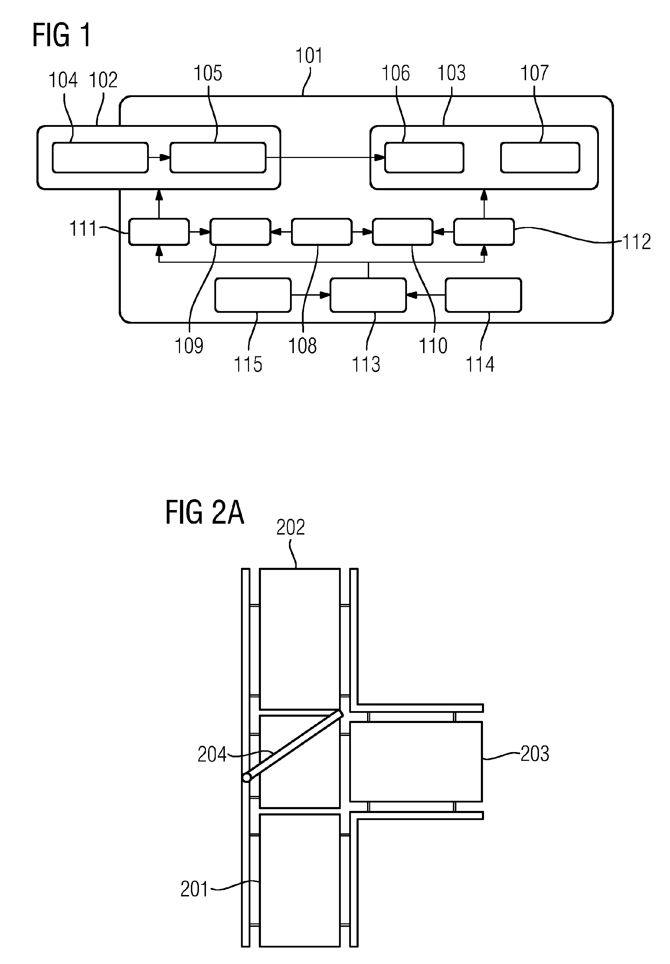

Fig.1 shows a framework for an integration of flexibility concepts and scheduling approaches.

A dynamic and stochastic environment 101 is partially subject to an offline scheduling 102 and to an online scheduling 103. Offline scheduling 102 comprises a static scheduling 104, which leads to a predictive robust scheduling 105. The predictive robust scheduling 105 is a basis for a reactive scheduling 106 that is part of the online scheduling 103. As an option, the online scheduling 103 also comprises a fully reactive scheduling 107.

Events 108 (negative or undesired events are referred to as events) have an impact on an uncertainty 109 as well as on effects 110 (stemming, e.g., from such uncertainties). The effects 110 require immediate reactions 112 which influence the online scheduling 103. The uncertainties 109 can be at least partially compensated by preventive measures 111 that affect the offline scheduling 102.

Preventive measures 111 and immediate reactions 112 are both based on a flexibility 113 of the technical system. This flexibility 113 can be based on, e.g., a manufacturing flexibility 114 or various other flexibilities 115.

Hence, uncertainties 109 can be addressed by preventive measures 111 while effects 110 can be dealt with by immediate reactions 112.

The framework suggests that robust and reactive scheduling may be used as complementary tools to address the uncertainties 109 as well as the effects 110 of said events 108.

### Scheduling

The framework shown in Fig.1 indicates four different scheduling approaches. A predictive, robust scheduling method 105 can be understood as an adaption of the static scheduling approach 104 for a dynamic and stochastic environment 101. The static scheduling 104 and the predictive robust scheduling 105 may both be offline approaches, i.e. the schedule may be provided previous to the system's operation and it may be iteratively improved; however, the offline scheduling 102 may in particular not be adapted during the execution phase of the technical system.

The aim of the predictive robust scheduling 105 is to complete jobs as planned while obtaining an acceptable performance. A scheduling method is in particular deemed robust if it is capable of maintaining a schedule even in case such (negative, undesired) events 108 occur. The approach ensures via preventive measures 111 that a schedule can be upheld in the presence of such events 108. Thus, it anticipates potential events 108 beforehand and tries to provide measures to cope with such events 108. For example, planning of an operation may include providing idle time, i.e. cycle time longer than required, in order to have some flexibility 113 for preventive measures 111.

Reactive scheduling 106 can be regarded as an upgrade of the predictive robust scheduling 105 comprising, e.g., an online schedule recovery repair strategy based on the offline approach. The basic requirement for an online approach is the capability of schedules to be adapted in real-time when effects of events threaten the performance of the technical system during its execution phase. Thus, online scheduling 103 may be used as an efficient tool for immediate reactions 112 that mitigate the effects 110 of the events 108.

### Flexibility

Offline and online scheduling methods in a dynamic and stochastic environment are capable of handling different aspects of events. The flexibility 113 can be understood as an ability to change or react with little penalty in time effort, cost and/or performance. The flexibility 113 helps to cope with the uncertainty 109 of the events 108 as well as their effects 110.

For example, a conveyor may allow for different operation modes (e.g. slow, normal and fast operation speed); by adjusting the operation mode, a robust scheduling method is provided that allows increasing or reducing the idle-time for processing a particular order. Also, during execution a reactive method is enabled to select a different operation mode to compensate, e.g., delays that are based on stochastic (undesired, negative) events.

Another example for flexibility is the ability of a machine to process several types of products. The more types can be processed, the more flexible a predictive scheduling approach can be. Switching between different types allows a reactive scheduling to flexibly react on said events.

Many kinds of flexibilities are possible. They may provide some margin to adjust parameters regarding the technical system in order to meet at least one target objective, e.g., just-in-time delivery or manufacture.

Flexibility may also be regarded as ability of a firm to manage production resources and uncertainties to meet customer requests. The flexibility may comprise several kinds of manufacturing flexibility.

The approach presented herein copes with a fixed or a variable (or dynamic) flexibility. The solution utilizes the available flexibility such that uncertainty and effects of events can be accounted for. The objective is to be able to comply with the target objective (e.g., time, quality) despite stochastic influences (said events) that affect the technical system, e.g., the manufacturing system (or portions thereof).

The flexibility may thus be utilized via a (re-)scheduling criterion that enables identifying robust schedules. Additionally, the (re-)scheduling criterion enables a rescheduling system (also referred to as "re-scheduler") to compensate deviations during execution of the schedule in a responsive manner.

As an example, the model presented can focus on scheduling of a sequence of stations that are capable of several operational modes. Thus, rather than scheduling an entire batch of orders, the model comprises a solution for defining a considerably robust schedule for a single order and then reactively amends it in case of said events.

FLEXIBILITY AND RECONFIGURABILITY MODEL

As an exemplary embodiment, a model is suggested that can be used to uniformly describe the structure of a technical system, e.g., a manufacturing or a delivery system. Due to the heterogeneity of such systems, only few assumptions about the systems may be utilized. As an example, a manufacturing system can be based on inbound logistics as, e.g., warehouses, which enable the delivery of source material forming entry points of the system and outbound logistics as, e.g., commissioning or warehouses, respectively. Between these entry and exit points of the system, no assumption about the structure is required to support an arbitrary manufacturing system.

Model of the Technical System (e.g., Manufacturing System Model)

Hereinafter, a manufacturing system is taken as an example of a technical system. Other technical systems including technical processes can be utilized in a similar way.

An architecture of a manufacturing system can be denoted in a graph-based manner. The vertices of the graph representing the system structure are formed by stages referred to as components or machines in the following. A machine can be any functionally defined manufacturing component which manipulates at least one property of a material, e.g., shape, location or arrangement.

The machine may in particular include devices performing manufacturing tasks, e.g., assembly or forming, as well as logistic systems manipulating, e.g., a location of a work piece.

Inbound and outbound logistics of a system can be realized by at least one component. Transportation systems may, e.g., form edges in the graph-based model; the edges may indicate that material can pass from one machine to another. Hence, a component of the system can be a conveyor, a lathe or a warehouse.

The flexibility of technical systems, e.g., of manufacturing systems, can be regarded in a control-oriented way; for example, a technical system can be controlled in a discrete manner by software-based programmable controllers (PLCs). Hence, the model of machine flexibility can be based on capabilities provided by a real-time control code run on such PLCs . Each machine $m \in M$ of a manufacturing system can perform different configurations $c \in C$ of the control code which can also be considered as operation modes.

A function

$$C : M \to 2^{\mathbb{C}}$$

defines the configurations $c \in C(m) \in C$ supported by a machine $m \in M$ of the system. This enables to describe a system by a configuration graph

$$\text{Sys} = (C, T),$$

where the set of all possible configurations is determined by

$$C = \bigcup_{m \in M} C(m).$$

The set of possible transitions $T \subseteq C \times C$ is defined by a layout of the machines as only two configurations can be executed in sequence if a work piece can be conveyed from one machine to the other and by restrictions given, e.g., by the required production process of the work piece.

**Fig.2A** shows a schematic of an exemplary logistics system comprising conveyors 201 to 203 and a switch 204. The switch 204 can be set to connect the conveyor 201 with the conveyor 202 or to connect the conveyor 201 with the conveyor 203.

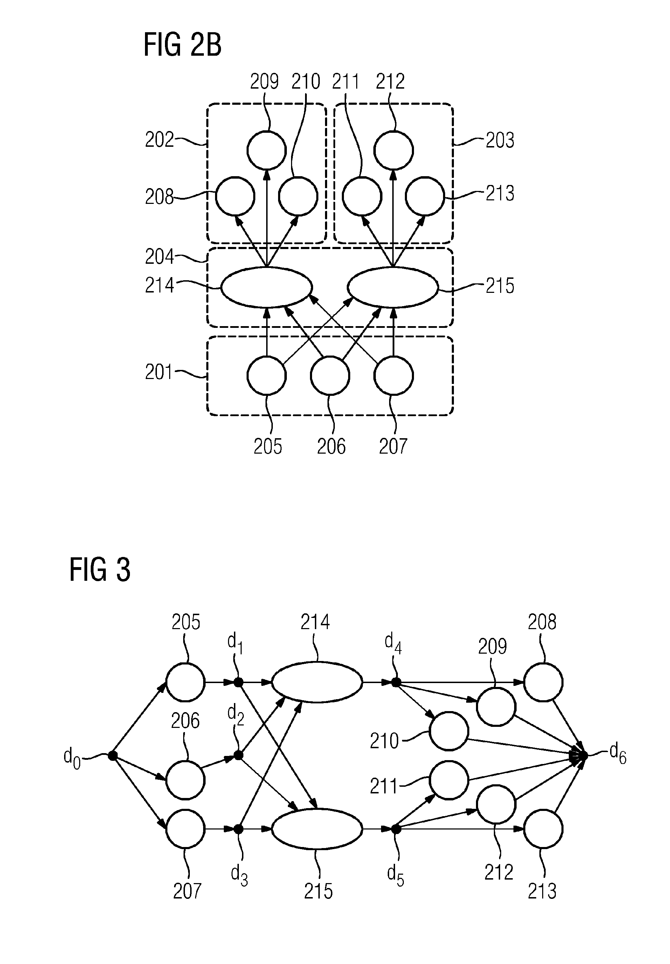

**Fig.2B** shows a schematic path diagram based on the exemplary logistics system of Fig.2A. Each conveyor 201 to 203 may be set to one of three configurations (operational modes), i.e. slow, normal or fast speed of operation. This is indicated in Fig.2B for the conveyor 201 by configurations 205 to 207, for the conveyor 202 by configurations 208 to 210 and for the conveyor 203 by configurations 211 to 213. The switch 204 has two configurations 214 ("straight" connecting the conveyor 201 with the conveyor 204) and 215 ("turn" connecting the conveyor 201 with the conveyor 203).

The configurations 205 to 215 can be denoted $c_i$ with $i$=1...9.

Reconfiguration Model

Due to the uncertainty of events (e.g., disturbances), monitoring with respect to a given target objective, e.g., a quality or a processing time, needs to become aware of the current state of the technical system, e.g., the production process. A comparison between an expected value of the target objective and its actual value after execution of a particular stage within the technical system allows applying changes to the technical system, if required.

Advantageously, transparency is achieved by monitoring (e.g., measuring) the state after each stage, in particular after each configuration. This approach allows detecting a deviation at an early stage.

However, different schemes of applying measurements along the stages of the technical system can be applied. In particular, various kinds of measurements and/or measurement points can be utilized for the approach presented herein. Monitoring can be achieved, e.g., at the work product itself or at a particular location for the work product to pass.

A high degree of transparency of the technical system can be achieved by an adequate monitoring capability; hence in case feedback after a configuration is provided by monitoring means, a decision can be made based on such feedback regarding which next configuration to choose at a subsequent stage of the technical system.

For example, an additional type of nodes, referred to as decision points $d \in D$, is introduced. Such nodes can be located subsequent to configurations before a certain transition has to be selected.

These decision points combine multiple outgoing transitions of a configuration graph indicating possibilities for a rescheduling system to choose from. In other words, the decision points indicate possibilities to influence the technical system, e.g., the production process.

In such scenario, a transition $(c, c_i) \in T$ of a configuration graph can be replaced by a decision point $d_1 \in D$ and two types of transitions: First a single transition between the configuration c and its subsequent decision node is generated. Second, a transition $(d, c_i) \in D \times C$ is introduced between the decision node and the successors $c_i$ of the configuration c.

A start of the production process can be modeled by a decision point $d_0 \in D$ used to monitor the beginning of a process. Furthermore, a final observation $d_n \in D$ (although not necessarily being an actual decision) is located after an execution of a configuration with no successor. Hence, the final observation thereby provides a sink of the rescheduling graph.

**Fig.3** shows a rescheduling graph based on Fig.2A and Fig.2B and the explanations provided before.

At the decision point $d_0 \in D$, a choice can be made between the configurations 205 to 207, i.e. the operation speed of the conveyor 201 can be set to slow, normal or fast. The configuration 205 thus leads to a decision point $d_1$, the configuration 206 leads to a decision point $d_2$ and the configuration 207 leads to a decision point $d_3$. At each decision point $d_1$ to $d_3$, the switch 204 can be set to "straight" (configuration 214) or "turn" (configuration 215); the selection "straight" thus leads to a decision point $d_4$ and the selection "turn" leads to a decision point $d_5$.

Hence, at the decision point $d_4$ the conveyor 201 is connected with the conveyor 202 and the operation speed of the conveyor 202 can now be set to slow, normal or fast, i.e. the configurations 208 to 210. Each of the configurations 208 to 210 results in a last decision point (sink) $d_6$.

Accordingly, at the decision point $d_5$ the conveyor 201 is connected with the conveyor 203 and the operation speed of the conveyor 203 can now be set to slow, normal or fast, i.e. the configurations 211 to 213. Each of the configurations 211 to 213 leads to the last decision point (sink) $d_6$.

Consequently, a rescheduling graph is defined as a tuple $R=(C,D,F)$ where $C$ is the set of configurations corresponding to the configurations of the system model. The decision nodes $d \in D$ enable the rescheduling system to select subsequent configurations containing two additional singletons: the starting decision and the finishing monitoring point. The set of transitions is given by $F \subseteq (C \times D) \cup (D \times C)$.

<u>Stochastic Behavior of configurations</u>

In a non-deterministic environment, criteria used for monitoring and control are affected by an execution of configurations in a stochastic way. Configurations of a system are projected to an applied criterion $C_R$. It is noted that $CR_{c1}$ is referred to as a projection of a configuration $c_1 \in C$ to the domain of the applied criterion $C_R$.

The non-deterministic effect of a configuration to the criterion $C_R$ is expressed by a stochastic distribution approximated by a normal distribution function $N(\mu, \sigma^2)$. It is noted that the normal distribution function is an exemplary distribution and other distributions may be applicable accordingly. It is also noted that the normal distribution function can be used to approximate other (probability) distributions.

Hence, the projection of each configuration of a configuration graph is given by $CR_{c_i} \sim \mathcal{N}(\mu_i, \sigma_i^2) = \mathcal{N}_i$

for all $c_i \in C$

with $\mu$ being the mean value and $\sigma^2$ being the variance of the respective normal density function.

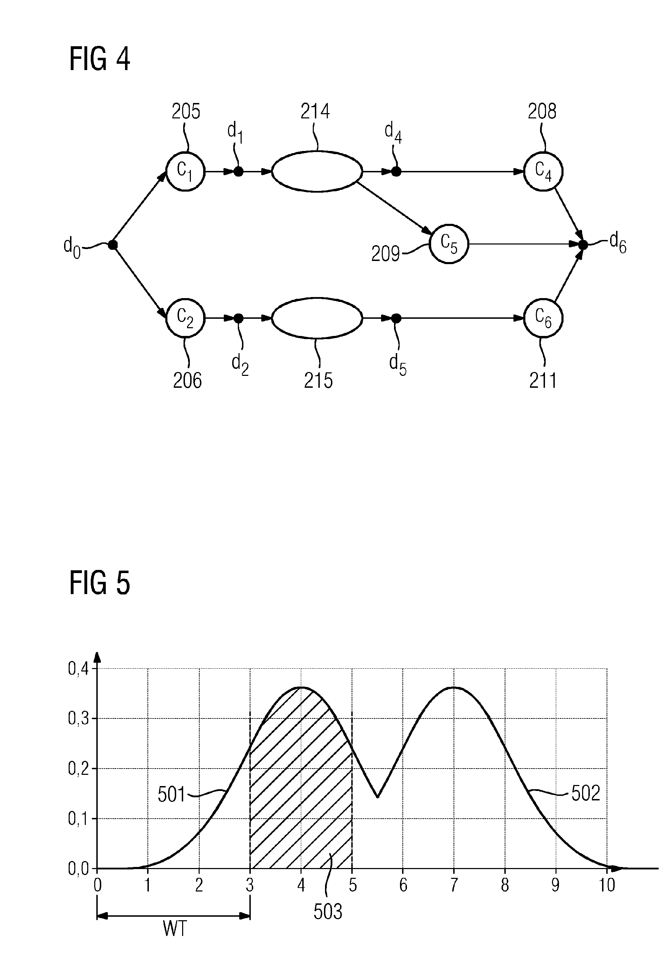

**Fig.4** shows a rescheduling graph with annotated stochastic behavior of configurations and decision spaces of decision nodes substantially based on Fig.3. It is noted that some transitions as indicated in Fig.3 are eliminated for lucidity.

The exemplary rescheduling graph is considered backwards from the sink $d_6$ towards the source $d_0$. At the decision point $d_4 \in D$, the rescheduling system can choose between the configurations $c_4$ 208 and $c_5$ 209. The decision to be made corresponds to an "exclusive or", because only one of the configurations can be selected. Thus, the decision space at the decision point $d_4 \in D$ can be denoted by

$$CR_{d_4} \sim \mathcal{N}_4 \oplus \mathcal{N}_5,$$

herein $N_4$ corresponds to the normal distribution function of the configuration $c_4$ and $N_5$ corresponds to the normal distribution function of the configuration $c_5$.

As there are no options at the decision point $d_5$, the probability density function of the successive configuration is used, i.e.

$$CR_{d_5} \sim \mathcal{N}_6,$$

wherein $N_6$ corresponds to the normal distribution function of the configuration $c_6$.

The execution of configurations in a sequence is described by a composition of the respective probability density functions.

For example, at the decision point $d_2$, only the configuration sequence $(c_{TURN}, c_6)$ can be executed, which corresponds to

$$CR_{d_2} \sim \mathcal{N}_T \circ \mathcal{N}_6,$$

wherein $N_r$ corresponds to the normal distribution function of the configuration $C_{TURN}$ 215.

Due to the fact that normal distribution functions are invariant to additive convolutions of independent normal distributed random variables, a sequential composition of normal distributions can be determined as

$$CR_{c_i} + CR_{c_j} \sim \mathcal{N}(\mu_i, \sigma_i^2) \circ \mathcal{N}(\mu_j, \sigma_j^2) = \mathcal{N}(\mu_i + \mu_j, \sigma_i^2 + \sigma_j^2).$$

.

Hence, a decision space which provides a sequence of configurations and subsequently gets to a decision point with available options can according to Fig.4 be summarized for the decision point $d_1$ as

$$\mathrm{CR}_{d_1} \sim N_S' \circ (N_4' \oplus N_5'),$$

wherein $N_s$ corresponds to the normal distribution function of the configuration $c_{STRAIGHT}$ 214.

Thus, independent from the decision $d_1$ either sequence ($c_{STRAIGHT}$, $c_4$) or ($c_{STRAIGHT}$, $c_5$) is executed. As *(N, $\oplus$,o)* forms an algebraic ring, the following re-formulation applies:

$$N_S' \circ (N_4' \oplus N_5') = (N_S' \circ N_4') \oplus (N_S' \circ N_5').$$

Hence, at the start $d_0$, the decision space according to Fig.4 can be denoted as

$$\mathrm{CR}_{d_0} \sim \left\{ [N_S' \circ (N_4' \oplus N_5')] \circ N_1' \right\} \oplus \left\{ (N_T' \circ N_6') \circ N_2' \right\},$$

wherein $N_1$ corresponds to the normal distribution function of the configuration $c_1$ and $N_2$ corresponds to the normal distribution function of the configuration $c_2$.

## COMPENSABILITY-BASED RECONFIGURATION

To realize an earliness/tardiness (re-)scheduling approach, a processing time $PT_{ci}$ of configurations $c_i \in C$ can be applied as projection to a monitored target objective which may be a duration required to perform a specific configuration.

Based on the model, the processing time represents the time interval a work piece stays within a configuration node of the configuration graph. Deviations with respect to the processing time of a configuration can for example be caused by a slip of a conveyor belt. Typically, automation systems are rather deterministic with respect to processing time, whereas manual work may show significantly higher variances. The stochastic behavior model introduced can be used to define a compensability function which indicates the capability to handle deviations with respect to processing time. Hence, the processing time of configurations can be applied as monitoring of the target objective.

With regard to an exemplary process, at each decision point the rescheduling system can select the upcoming at least one configuration with the highest probability to finish the process within the required target objective, e.g., predefined time and/or quality. The time can be determined by, e.g., a due date of a work piece at the end of the production process.

A measure for the probability corresponds to an area between the probability density function and the abscissa.

Based on the exemplary scenario shown in Fig.4, the decision space at the decision point $d_1$ is given by

$$N_a' \oplus N_b' = max\{N_a', N_b'\}$$

with

$$N_a' = N_S' \circ N_4'$$

and

$$N_b' = N_S' \circ N_5'.$$

The exclusive-or operation "$\oplus$" can be calculated via a maximum operator, i.e. by choosing a configuration that has the highest probability to still reach the target, e.g., a due date. **Fig.5** shows an exemplary compensability function comprising two normal distribution functions 501 and 502, wherein the y-axis indicates a probability measure and the x-axis indicates a processing time. An area 503 indicates a measure for the likelihood that the processing time of "4" is maintained by the remaining stages of the technical system.

Compensability-based Scheduling

The introduced compensability function can be used to determine an optimal starting point of the production process. The compensability function enables the scheduling system to efficiently utilize the rescheduling capabilities of the technical system.

This is achieved by selecting the starting point with the highest chance for a work piece to reach the target objective, e.g., to be finished in time.

For example, a production job obtains two timestamps $t_{min}, t_{max} \in$ TIME defining an absolute time when the work piece has to be produced at the earliest respectively at the latest.

As the compensability model may use terms of relative processing times supported by a manufacturing system, a conversion from the absolute time scale into such relative time representation can be provided. A time $t_{max} \in$ TIME is converted via a timestamp $t_{sched} \in$ TIME at which the scheduling is performed, so that the relative due date d can be determined as

$$d = t_{max} - t_{sched} - \Delta,$$

wherein a tolerance

$$\Delta = \frac{t_{max} - t_{min}}{2}$$

represents a positive and negative tolerance with respect to the due date *d*.

Thus, a production job can be described as a tuple $(d, \Delta) \in$ R $\times$ R. To schedule the production job correctly, the scheduler (e.g., scheduling system or component providing scheduling means) determines a time period to wait relatively to the scheduling time $t_{sched} \in$ TIME before the production is started, referred to as waiting time $WT \in$ R.

The absolute starting time can be determined by

$$WT + t_{sched} + \Delta = t_{start}.$$

As mentioned, the compensability value of a given compensability function COMP corresponds to the area between the compensability function itself and the abscissa as shown in Fig.5. Hence, the scheduler searches for a combination of processing time *PT* and waiting time *WT*, which provides the maximum value of the compensability function so that

$$WT + PT \in [d - \Delta, d + \Delta].$$

Hence, the scheduler determines the option to select via the following formula:

$$argmax_{WT} \int_{max(0, d - \Delta + WT)}^{d + \Delta + WT} \text{COMP}(s),$$

wherein $s \in D$ is a starting decision point of the manufacturing system as described above (see $d_0$) and COMP(s) denotes its compensability function.

Compensability-based Rescheduling

During execution of the production process, a current time $t_{curr} \in T$ may be monitored at each decision point of the rescheduling graph. In a reactive manner, the rescheduling system determines the next optimal configuration by checking the successive decision points and it selects the configuration with the highest compensability value (i.e. the highest flexibility) to meet the target objective, e.g., due date window with regard to processing time left.

The absolute time $t_{curr} \in$ TIME can thus be projected to the processing time domain. The relative time $t \in R$ can be determined via the production job definition by

$$t = t_{max} - t_{curr} - \Delta$$

with

$$\Delta = \frac{t_{max} - t_{min}}{2}.$$

To identify the next configuration with the highest compensability value, the rescheduling system calculates the compensability value between

$$a = max(0, d - t - \Delta)$$

and

$$b = d - t + \Delta$$

at a decision point $x \in D$ of the rescheduling graph $R=(C,D,F)$ via the following formula:

$$argmax_{\{c:(x,c) \in F \wedge (c,x_2) \in F\}} \int_a^b \left[ \mathrm{COMP}(x_2) \circ PT_c \right]$$

If the resulting maximum is below a given threshold, the rescheduling component will trigger a predefined action that the due date window cannot be met. This action may comprise an alarm, an adjustment of the technical system and/or an abortion of the technical system (or a component thereof). Hence, the action can be used as an early detection of a delivery failure before it actually occurs.

Based on the compensability function, threshold values can be defined which consider the reconfiguration capabilities of the technical system. If the compensability falls below a pre-defined threshold an in-time delivery or manufacture of the work piece may no longer be possible. Such thresholds may be derived on historical or empirical data and they may be (dynamically) adjusted over time.

The formula mentioned above does not only allow determining the thresholds, but also the configuration (as a result of the argmax-expression) that can be used for re-scheduling purposes.

FURTHER EMBODIMENTS AND ADVANTAGES

The solution presented allows adjusting technical systems, e.g., manufacturing, delivery or production processes in a reactive way utilizing the flexibility of the technical system. The approach considers capabilities of the technical system's components, e.g., automation system, factory, machines, devices, etc. as well considers the component's ability to compensate deviations of, e.g., processing time.

The compensability criterion introduced herewith considers the flexibility of the technical system during operation in a robust way for scheduling. This helps maintaining a required target, e.g., manufacturing or delivery time, of a work piece processed by the technical system. Hence, undesired events can at least partially be compensated by means of rescheduling.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

## Claims

1. Method for processing a technical system comprising several stages,

   - wherein for each subsequent stage of processing a work product a measure is determined indicating a probability to fulfill a target objective;
   - wherein the subsequent stage is determined for which the measure indicates the highest probability to fulfill the target objective.

2. The method according to claim 1, wherein for at least two alternatives to be selected as subsequent stages of processing the work product, probability distributions for each of the alternatives are combined by an exclusive-or operation.

3. The method according to any of the preceding claims, wherein upcoming stages that are to be processed in sequence are determined by combining their probability distributions in an additive manner.

4. The method according to any of the preceding claims, wherein the measure is determined when an event is detected.

5. The method according to any of the preceding claims, wherein the measure comprises, indicates or is based on a flexibility.

6. The method according to any of claims 4 or 5, wherein the flexibility is based on at least one subsequent stage of processing the work product.

7. The method according to any of the preceding claims, wherein the subsequent stage is selected for which the measure indicates the highest probability to fulfill the target objective.

8. The method according to any of claims 1 to 6, wherein a predefined action is triggered, if the measure for the selected subsequent stage indicates that the target objective cannot be met.

9. The method according to claim 8, wherein said predefined action comprises

   - an alarm;
   - an adjustment of the technical system;
   - an abortion of the technical system.

10. The method according to any of claims 8 or 9, wherein triggering the predefined action is dynamically adjusted based on historical data of the technical system.

11. The method according to any of the preceding claims, wherein the technical system comprises at least one of the following:

- a production system or process,
- a manufacturing system or process,
- a delivery system or process,
- an automation system or process,
- a supply chain.

**12.** The method according to any of the preceding claims, wherein the stage of the technical system comprises at least one of the following:

- a component of the technical system;
- a machine;
- a material processing or conveying unit;
- a storage unit;
- a processing device;
- an automation device;
- a factory;
- a production site;
- a transport capability;
- a logistics capability.

**13.** The method according to any of the preceding claims, wherein the target objective comprises at least one of the following:

- a temporal or time objective;
- a quality objective.

**14.** A device for processing a technical system,

- wherein the technical system comprises several stages,
- wherein the technical system comprises a processing unit that is arranged for

- determining a measure for each subsequent stage of processing a work product, which measure indicates a probability to fulfill a target objective;
- determining the subsequent stage for which the measure indicates the highest probability to fulfill the target objective.

**15.** A system comprising at least one device according to claim 14.

FIG 1

FIG 2A

FIG 2B

FIG 3

# FIG 4

# FIG 5

Europäisches
Patentamt

European
Patent Office

Office européen
des brevets

## EUROPEAN SEARCH REPORT

Application Number

EP 11 17 5980

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject-matter, with due regard to the description and drawings in accordance with Article 92 EPC, relates to processes comprised in the list of subject-matter and activities excluded from patentability under Article 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. * ----- | 1-15 | INV. G06Q10/00 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 2 December 2011 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)